# EUROPEAN PATENT SPECIFICATION

(11) **EP 2 479 942 B1**
(45) Date of publication and mention of the grant of the patent: **24.01.2018**
(21) Application number: 10824422.9
(22) Date of filing: 10.09.2010
(51) Int. Cl.: H04L 12/70, H04L 12/751, H04L 12/703

(54) **METHOD AND SYSTEM FOR DISCOVERING RING NETWORK PROTECTION INFORMATION**
VERFAHREN UND SYSTEM ZUR ERKENNUNG VON RINGNETZWERK-SCHUTZINFORMATIONEN
PROCÉDÉ ET SYSTÈME DE DÉCOUVERTE D'INFORMATIONS DE PROTECTION DE RÉSEAU EN ANNEAU

(30) Priority: 22.10.2009 CN 200910110309
(43) Date of publication of application: 25.07.2012
(73) Proprietor: ZTE Corporation, Shenzhen, Guangdong 518057 (CN)
(72) Inventor: NIAN, Qingfei, Guangdong 518057 (CN)
(74) Representative: Johnson, Richard Alan
(86) International application number: PCT/CN2010/076785
(87) International publication number: WO 2011/047581

(56) References cited:
- EP-A1- 1 322 056
- EP-A1- 1 802 048
- CN-A- 1 859 273
- CN-A- 101 155 064
- CN-A- 101 409 666
- US-A1- 2008 239 970
- US-B1- 6 269 452

## Description

### Technical Field

The present invention relates to network technology, and particularly, to a method and system for discovering ring network protection information in network management field.

### Background of the Related Art

The ring network protection has many advantages such as the simple topology structure, the high bandwidth utilization ratio, the good survivability, the short network restoration time and so on, and it is the most common protection form applied in communication network field.

The discovery of the ring network protection information is to make a node know the protection information of the ring network, as such, network management system can collect all the ring network protection information when accessing to any node. The discovery of the ring network protection information can be completed at a management plane, and also can be completed at a control plane.

The discovery of the ring network protection information is particularly important for an Automatically Switched Optical Network (ASON). Timely and accurate discovery of the ring network protection information can strengthen the service management ability prominently. For example, when routing selection is performed during service automatic restoration, the node can use the ring network protection information to enhance the service routing processing ability of the node, which is significant during automatic rerouting. The processing ability for a wrong connection is also improved when the ring network protection information is saved on the node. Currently, there is no method for discovering ring network protection information which is based on the node and suitable for the ASON being able to discover the ring network protection information effectively.

EP 1 802 048 A1 discloses a method for discovering topology structure automatically in a Multi Protocol Label Switching (MPLS) ring network. The method includes: when receiving a topology discovering message, determining, by a node in the MPLS, whether the topology discovering message is sent by the node; if yes, updating information of topology structure of the MPLS ring network stored in the node according to information of topology structure of the MPLS ring network carried by the topology discovering message; otherwise, appending information of topology structure of the node to the topology discovering message and forwarding the topology discovering message to a next node.

"A method for discovering ring network and ring network topology and a node" with a patent application number 200710175790.7 discloses a solution in the field of Transport-Multi Protocol Label Switching (T-MPLS). However, the ring network topology is not equal to the ring network protection and the topology of a ring shape may not be the ring network protection, so the discovery of ring network or ring network topology is not necessarily the discovery of ring network protection. The patent application adopts the method of exchanging a saved topology table with a neighbor node to implement the discovery of ring network topology, but as the topology table contains information of the whole network, the method of the patent application has a larger network resource consumption, and this kind of consumption will increase doubly with the increase of the number of nodes. The patent application adopts the neighbor nodes to exchange the saved topology tables, so the topology discovery is slow and low efficient. The patent application can not implement a multi-ring ring topology discovery or multi-domain ring topology discovery, does not give a method for distinguishing the multiple rings, and also does not give a method for managing the discovery information of multi-ring topology, and thus can not meet the management requirement of the ASON.

### Summary of the Invention

According to the present invention, there is provided a method according to claim 1 and a system according to claim 5. Further improvements and embodiments are provided in the dependent claims.

Also disclosed herein is a method for discovering ring network protection information, which can reduce system consumption and improve efficiency of discovering the ring network protection information.

Also disclosed herein is a method for discovering ring network protection information, which comprises: a current node sending node ring network protection information of the current node to other nodes except the current node; and the current node receiving the node ring network protection information sent by the other nodes, updating or keeping whole network or intra-domain ring network protection information saved by the current node.

According to one example of the above method for discovering ring network protection information, the step of updating the whole network or intra-domain ring network protection information saved by the current node comprises: performing processing of modification, addition or deletion on the whole network or intra-domain ring network protection information saved by the current node according to a message type and a protection ring identifier in the received node ring network protection information.

According to one example of the above method for discovering ring network protection information, the node ring network protection information comprises: the protection ring identifier, a ring node identifier, the message type, eastbound and westbound node identifier of the node, a protection type of a protection ring, a protection state, a work protection pair configuration and a protection parameter.

According to one example of the above method for discovering ring network protection information, a condition for the node sending the node ring network protection information to the other nodes comprises: a node initialization, a node deletion and node addition, a change in eastbound and westbound connection relation of the node, a change in protection state, a change in work protection pair configuration, or a change in protection parameter.

According to one example of the above method for discovering ring network protection information, a carrier of the ring network protection information is a neighbor discovery protocol or topology discovery protocol, or an operation administration and maintenance message, or a singly defined protocol message.

According to one example of the above method for discovering ring network protection information, the step of performing processing on the whole network or intra-domain ring network protection information saved by the current node comprises:
if the message type in the received node ring network protection information is modification, modifying the whole network or intra-domain ring network protection information saved by the current node;
if the message type in the received node ring network protection information is addition, and the protection ring identifier in the node ring network protection information has existed, adding the node ring network protection information of a newly added node in the whole network or intra-domain ring network protection information saved by the current node, and updating the connection relation of the other nodes;
if the message type in the received node ring network protection information is addition, and the protection ring identifier in the node ring network protection information does not exist, newly adding a protection ring storage branch in the whole network or intra-domain ring network protection information saved by the current node to save the node ring network protection information of the newly added node;
if the message type in the received node ring network protection information is deletion, and the protection ring identifier in the node ring network protection information has existed, deleting the node ring network protection information of a node to be deleted in the whole network or intra-domain ring network protection information saved by the current node, and updating the connection relation of the other nodes; if the number of nodes of the protection ring is less than one after the node is deleted, deleting the protection ring; and
if the message type in the received node ring network protection information is deletion, and the protection ring identifier in the node ring network protection information does not exist, not performing any processing.

Also disclosed herein is a system for discovering ring network protection information, and the system comprises a protection information sending module, a protection information receiving module and a protection information processing module; wherein the protection information sending module is configured to: send node ring network protection information; the protection information receiving module is configured to: receive the node ring network protection information; and the protection information processing module is configured to: update or keep whole network or intra-domain ring network protection information saved by a current node.

According to the system for discovering ring network protection information, the protection information processing module is configured to: perform updating on the whole network or intra-domain ring network protection information saved by the current node, which comprises performing corresponding processing of modification, addition or deletion on the whole network or intra-domain ring network protection information saved by the current node according to a message type and a protection ring identifier in the received node ring network protection information.

According to the system for discovering ring network protection information, the node ring network protection information comprises: the protection ring identifier, a ring node identifier, the message type, eastbound and westbound node identifier of the node, a protection type of a protection ring, a protection state, a work protection pair configuration and a protection parameter.

According to the system for discovering ring network protection information, the protection information processing module comprises a message type identification module, a protection ring identifier identification module, an updating module, a newly adding module and a deleting module; wherein,
the message type identification module is configured to: identify whether the message type is modification, addition or deletion;
the protection ring identifier identification module is configured to: identify whether the protection ring identifier exists or not;
the updating module is configured to: modify the whole network or intra-domain ring network protection information when the message type is modification;
the newly adding module is configured to: newly add the node ring network protection information in the whole network or intra-domain ring network protection information when the message type is addition and the protection ring identifier exists, and update a connection relation of the node;
the newly adding module is further configured to: newly add a protection ring storage branch in the whole network or intra-domain ring network protection information to save new node ring network protection information when the message type is addition and the protection ring identifier does not exist;
the deleting module is configured to: delete the node ring network protection information in the whole network or intra-domain ring network protection information when the message type is deletion and the protection ring identifier exists, and update the connection relation of the node; and
the deleting module is further configured to: delete the protection ring when the number of nodes of the protection ring is less than one.

Compared with the existing technology, the beneficial effect of the present invention is: in the method for discovering ring network protection information according to the present invention, the node in a protection ring network sending the node ring network protection information of the current node to other nodes and receiving the node ring network protection information sent by the other nodes either, and performing processing of modification, addition or deletion on the whole network or intra-domain ring network protection information saved by the current node. According to the present invention, what is interacted between nodes is the node ring network protection information, which has a small amount of information and system consumption. Meanwhile, because each node sends the node ring network protection information to all other nodes and receives the node ring network protection information sent by all other nodes either, the interaction time of the ring network protection information is shortened and the efficiency of discovering the ring network protection is improved.

### Brief Description of Drawings

FIG. 1 illustrates a flow chart of the processing method according to the present invention.
FIG. 2 illustrates a ring network structure when the node is modified according to the present invention.
FIG. 3 illustrates a situation that the node is deleted according to the present invention.
FIG. 4 illustrates a situation that the protection ring is deleted according to the present invention.
FIG. 5 illustrates a situation of newly adding a node in the existing protection ring according to the present invention.
FIG. 6 illustrates a situation of newly adding a protection ring according to the present invention.
FIG. 7 illustrates a structural diagram of the system according to the present invention.

### Preferred Embodiments of the Present Invention

The present invention will be further described in detail in combination with the accompanying drawings and specific embodiments below.

### Example 1

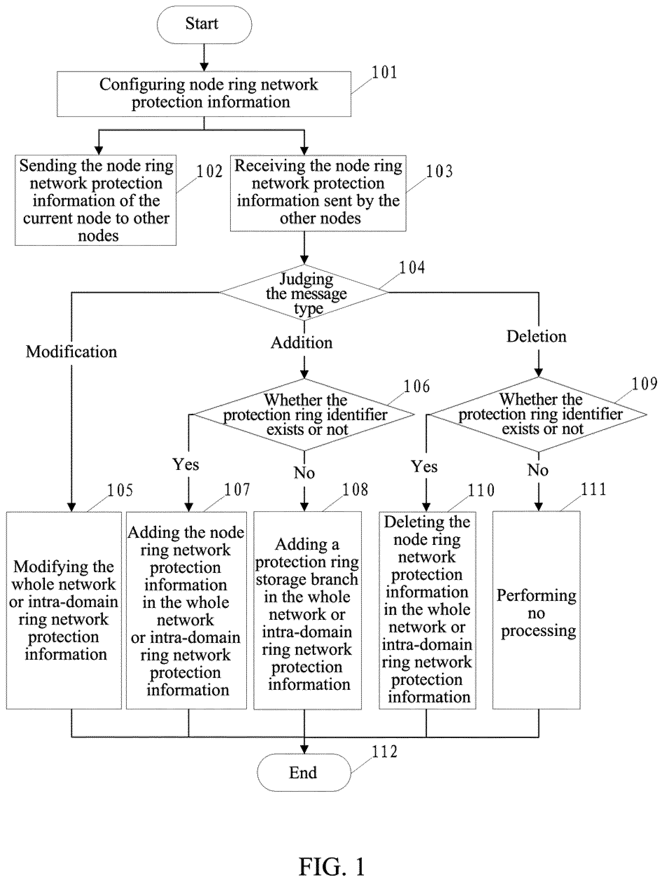

As shown in FIG. 1, a method for discovering ring network protection information according to one example of the present invention comprises the following steps.

In step 101, the node ring network protection information is configured on each node of the protection ring.

The node ring network protection information refers to the ring network protection information related to a node, and comprises: a protection ring identifier, a ring node identifier, a message type, eastbound and westbound node identifier of the node, a protection type of the protection ring, a protection state, a work protection pair configuration and a protection parameter, etc.

Wherein, the protection ring identifier is used to identify different protection rings, and inexistence of the protection ring identifier represents that the protection ring does not exist in the existing protection ring network; the ring node identifier is used to distinguish different nodes on the protection ring; the eastbound and westbound ring node identifier of the node is used to describe the connection relation of a node; the protection type of the protection ring comprises a shared ring protection and so on; the protection state is used to represent the protection state of the protection ring in which the node is located, such as work in main state, work in standby state and so on; the work protection pair configuration is usually represented by a work protection relation list; the protection parameter comprises Time of Waiting to Recovery (WTR) and the hold off time (HoldOffTime) and so on.

The message type in the node ring network protection information comprises modification, addition and deletion, when the node is a newly added node, the message type is addition; when the node is deleted or the protection ring in which the node is located is deleted, the message type is deletion, and the message type of other situations is modification.

A carrier of the ring network protection information can be a neighbor discovery protocol or topology discovery protocol (such as an Open Shortest Path First (OSPF) protocol is adopted to perform expansion), or an Operation Administration and Maintenance (OAM) message, and also can be other singly defined protocol messages.

The protection ring identifier can be used to distinguish different protection rings, can meet the discovery of ring network protection information in the condition of multiple rings, and especially can meet the management requirement of the ASON.

In step 102, the node sends the node ring network protection information of the current node to other nodes.

A condition for the node sending the node ring network protection information to the other nodes is: node initialization, node deletion and node addition, change in eastbound and westbound connection relation of the node, change in protection state, change in work protection pair configuration and change in protection parameter, etc.

One routing domain can comprise several protection ring networks, the node can send the node protection information to all nodes within the routing domain and also can send to nodes outside the routing domain by configuration. The node sending the node protection information is not limited to the current protection ring network, which can make the network management system know the protection information of the whole network comprehensively and improve the management ability of the network management system.

In step 103, the node receives the node ring network protection information sent by other nodes.

Each node sends the node ring network protection information of the current node to other nodes, and meanwhile receives and saves the node ring network protection information sent by other nodes, and the total of all the node protection information saved on the node is called as whole network or intra-domain ring network protection information.

Each node saves the ring network protection information of the whole protection ring network, and it is only needed to access any node for the network management system to be able to collect all ring network protection information, which improves the processing speed and management ability of the network management system.

In step 104, the node judges the message type in the node ring network protection information after receiving the above node ring network protection information; if the message type is modification, step 105 is carried out; if the message type is addition, step 106 is carried out; and if the message type is deletion, step 109 is carried out.

In step 105, if the message type is modification, the whole network or intra-domain ring network protection information saved by the current node is modified; and step 112 is carried out.

In step 106, if the message type is addition, whether the protection ring identifier exists or not is judged; if yes, step 107 is carried out; if no, step 108 is carried out.

In step 107, if the message type is addition and the protection ring identifier exists, it is indicated that a node is newly added in the existing protection ring, the node ring network protection information of the newly added node is added in the whole network or intra-domain ring network protection information saved by the current node at the moment, and the connection relation of the other nodes is updated; step 112 is carried out.

In step 108, if the message type is addition and the protection ring identifier does not exist, it is indicated that a protection ring is newly added and a node is added in the newly added protection ring, a protection ring storage branch is required to be added in the whole network or intra-domain ring network protection information at the moment to save the node ring network protection information of the newly added node; step 112 is carried out.

In step 109, if the message type is deletion, whether the protection ring identifier therein exists or not is judged; if yes, step 110 is carried out; if no, step 111 is carried out.

In step 110, if the message type is deletion and the protection ring identifier exists, it is indicated that a node is deleted in the existing protection ring, the node ring network protection information of a node to be deleted is deleted in the whole network or intra-domain ring network protection information saved by the current node at the moment, and the connection relation of the other nodes is updated; if the number of nodes of the existing protection ring is less than one after the node to be deleted is deleted in the existing protection ring, the protection ring is deleted; and step 112 is carried out.

In step 111, if the message type is deletion and the protection ring identifier does not exist, it is indicated that the node does not belong to the current ring network, no processing is performed at the moment, and step 112 is carried out.

In step 112, the discovery of ring network protection information is implemented, and the flow ends.

As what is interacted between nodes is the node ring network protection information, which has a small amount of information, the system consumption in the information interaction process is low. Meanwhile, because each node sends the node ring network protection information to the other nodes and receives the node ring network protection information sent by the other nodes either, the interaction time of the ring network protection information is shortened and the efficiency of discovering the ring network protection is improved.

### Example 2

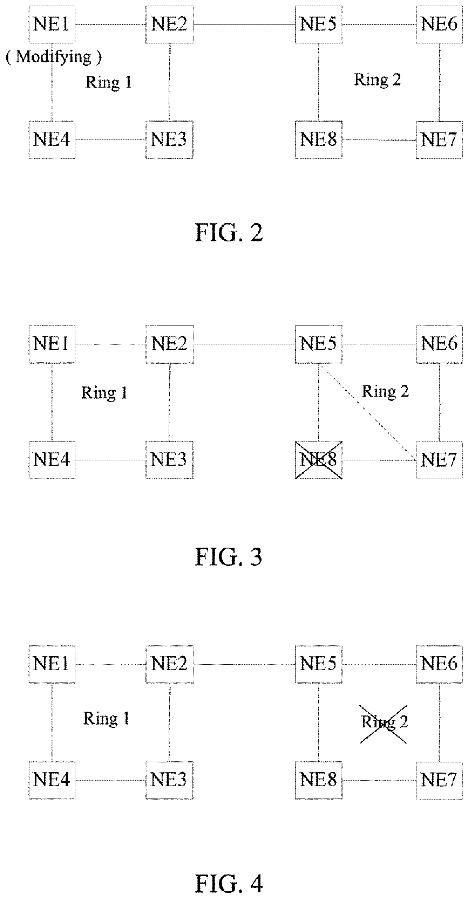

As shown in FIG. 2, when the node ring network protection information of the node NE1 changes in a protection ring network comprised of two protection rings of ring 1 and ring 2, the method for discovering ring network protection information comprises the following steps.

In step 201, when the protection state of the node NE1 changes, the node ring network protection information of the node NE1 is sent to the other nodes, and the specific format of the node ring network protection information is decided according to a protocol bearing the node ring network protection information. The specific format is represented by table 1 according to the example.

**Table 1:**

| Information item | Information content |
|---|---|
| Protection ring identifier | Ring 1 |
| Message type | Modification |
| Ring node identifier | NE1 |
| Eastbound node identifier of the ring node | NE4 |
| Westbound node identifier of the ring node | NE2 |
| Protection type of the protection ring | Shared ring protection |
| Protection state | Work in standby state |
| Work protection pair configuration | Work protection relation list. E.g., [0] work: port 1, protection: port 2; [1] work: port 3, protection: port 4; |
| Protection parameter | Time of Waiting to Recovery (WTR), the hold off time (HoldOffTime) |

The protection parameter in table 1 comprises Time of Waiting to Recovery (WTR) and the hold off time (HoldOffTime), also comprises a blocking port and so on in the condition of Ethernet ring protection, and also can comprise other parameters. Users can define the other parameters by themselves, which can meet different demands of the users.

In step 202, the node NE2 receives the node ring network protection information sent by the node NE1 and determines the message type therein is modification, and thus modifies the whole network or intra-domain ring network protection information saved by the current node.

The specific format of the original whole network or intra-domain ring network protection information on the node NE2 is decided according to the protocol bearing the information, and is represented by table 2 according to the example.

**Table 2:**

| Protection ring identifier | Protection type | Node identifier | Eastbound | Westbound | Protection state | Work protection pair configuration | Protection parameter |
|---|---|---|---|---|---|---|---|
| Ring 1 | Shared ring protection | NE1 | NE4 | NE2 | Work in main state | Work protection relation list | WTR=2, HoldOffTime =5 |
| | | NE2 | NE1 | NE3 | Work in main state | Work protection relation list | WTR=2, HoldOffTime =5 |
| | | NE3 | NE2 | NE4 | Work in main state | Work protection relation list | WTR=2, HoldOffTime =5 |
| | | NE4 | NE3 | NE1 | Work in main state | Work protection relation list | WTR=2, HoldOffTime =5 |
| Ring 2 | Shared ring protection | NE5 | NE8 | NE6 | Work in main state | Work protection relation list | WTR=2, HoldOffTime =5 |
| | | NE6 | NE5 | NE7 | Work in main state | Work protection relation list | WTR=2, HoldOffTime =5 |
| | | NE7 | NE6 | NE8 | Work in main state | Work protection relation list | WTR=2, HoldOffTime =5 |
| | | NE8 | NE7 | NE5 | Work in standby state | Work protection relation list | WTR=2, HoldOffTime =5 |

After receiving the message node ring network protection information, whose message type is modification, sent by the node NE1, the node NE2 finds the node ring network protection information of the node NE1 according to the ring identifier and node identifier in table 2. By comparing table 2 with table 1, it can be known that the node NE1 modifies the protection state, thus the protection state of the node NE1 of the ring 1 is modified from work in main state to work in standby state in table 2.

### Example 3

As shown in FIG. 3, the node NE8 on ring 2 is deleted in a protection ring network comprised of two protection rings of ring 1 and ring 2, and the method for discovering ring network protection information comprises the following steps.

In step 301, the node NE8 is deleted, and the node ring network protection information, whose message type is deletion, is sent form the NE8 to other nodes.

In step 302, the node NE2 receives the node ring network protection information sent by the node NE8, determines that the message type is deletion and the ring identifier is ring 2, that is, one node NE8 is deleted in the existing ring 2, and thus deletes the node ring network protection information corresponding to the node NE8 in the whole network or intra-domain ring network protection information saved by the NE2, that is, one line of the node NE8 is deleted in ring 2 in table 2, and updates the eastbound and westbound connection relations of node NE5 and node NE7.

### Example 4

As shown in FIG. 4, the ring 2 is deleted in a protection ring network comprised of two protection rings of ring 1 and ring 2, and the method for discovering ring network protection information comprises the following steps.

In step 401, the ring 2 is deleted, the nodes NE5, NE6, NE7 and NE8 on the ring 2 send the node ring network protection information to other nodes, and the message type therein is deletion.

In step 402, the node NE2 receives the node ring network protection information sent by the nodes NE5, NE6, NE7 and NE8, and then deletes the node ring network protection information of the nodes NE5, NE6, NE7 and NE8 saved by the current node, updates the connection relation of related nodes, and deletes the ring 2 because there is no node in the ring 2 after the last node is deleted.

### Example 5

A node NE9 is newly added in the ring 2 in a protection ring network comprised of two protection rings of ring 1 and ring 2, and the method for discovering ring network protection information comprises the following steps.

In step 501, the node NE9 is newly added in the ring 2, and the node NE9 sends the node ring network protection information whose message type is addition to other nodes.

In step 502, a node receives the node ring network protection information sent by the NE9, determines that the message type is addition and the protection ring identifier namely ring 2 exists, thus adds the node ring network protection information of the node NE9 in the ring 2 in the whole network or intra-domain ring network protection information saved by the current node, and updates the connection relations of node NE7 and node NE8.

### Example 6

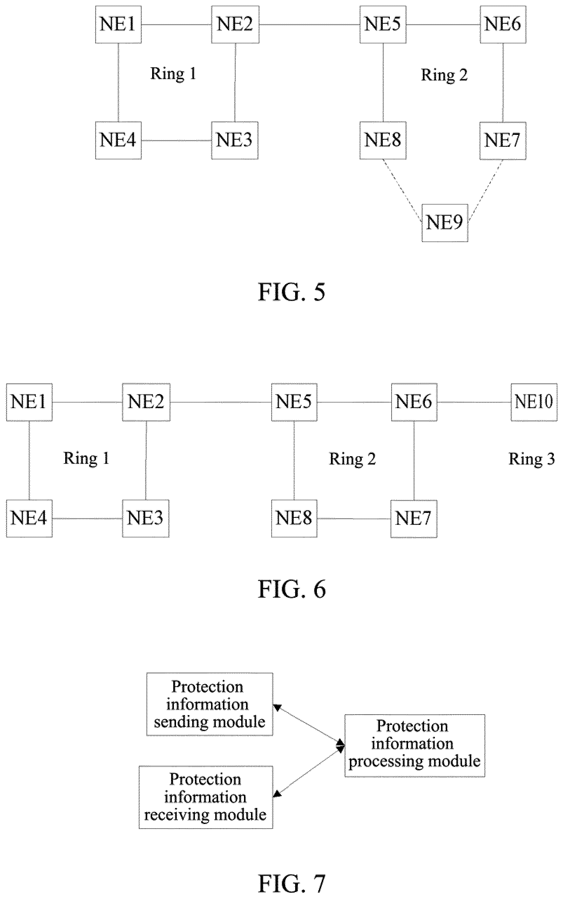

As shown in FIG. 6, a node NE10 is newly added in a ring network comprised of two protection rings of ring 1 and ring 2, the protection ring identifier of the NE10 is ring 3, and thus the method for discovering ring network protection information comprises the following steps.

In step 601, the node NE10 is newly added, and sends the node ring network protection information whose message type is addition to the other nodes.

In step 602, a node receives the node ring network protection information of the node NE10, determines that the message type is addition and the protection ring identifier namely ring 3 does not exist, thus newly adds a protection ring storage branch namely ring 3, and saves the node ring network protection information of the node NE10.

### Example 7

As shown in FIG. 7, a system for discovering ring network protection information according to one example of the present invention comprises: a protection information sending module, a protection information receiving module and a protection information processing module; wherein, the protection information sending module is used to send the node ring network protection information; the protection information receiving module is used to receive the node ring network protection information; and the protection information processing module is used to update or keep whole network or intra-domain ring network protection information saved by the current node.

In the system for discovering ring network protection information according to the example, the protection information processing module updating the whole network or intra-domain ring network protection information saved by the current node comprises: performing corresponding processing of modification, addition or deletion on the whole network or intra-domain ring network protection information saved by the current node according to a message type and a protection ring identifier in the received node ring network protection information.

In the system for discovering ring network protection information according to the example, the node ring network protection information comprises: the protection ring identifier, a ring node identifier, the message type, eastbound and westbound node identifier of the node, a protection type of the protection ring, a protection state, a work protection pair configuration and a protection parameter.

In the system for discovering ring network protection information according to the example, the protection information processing module comprises: a message type identification module, a protection ring identifier identification module, an updating module, a newly adding module and a deleting module; wherein, the message type identification module is used to identify whether the message type is modification, addition or deletion;
the protection ring identifier identification module is used to identify whether the protection ring identifier exists or not;
the updating module is used to modify the whole network or intra-domain ring network protection information when the message type is modification;
the newly adding module is used to newly add the node ring network protection information in the whole network or intra-domain ring network protection information when the message type is addition and the protection ring identifier exists, and update the connection relation of the node;
the newly adding module is also used to newly add a protection ring storage branch in the whole network or intra-domain ring network protection information to save new node ring network protection information when the message type is addition and the protection ring identifier does not exist;
the deleting module is used to delete the node ring network protection information in the whole network or intra-domain ring network protection information when the message type is deletion and the protection ring identifier exists, and update the connection relation of the node; and
the deleting module is also used to delete the protection ring when the number of nodes of the protection ring is less than one.

The above content is the further description in detail with reference to specific preferred examples for the present invention, but they are examples only given for an easy understanding, and the specific examples of the present invention should not be considered to be limited to these descriptions.

### Industrial Applicability

The node in a protection ring network in the present invention sends the node ring network protection information of the current node to other nodes and receives the node ring network protection information sent by the other nodes either, and performs processing of modification, addition or deletion on the whole network or intra-domain ring network protection information saved by the current node. According to the present invention, what is interacted between nodes is the node ring network protection information, which has a small amount of information and system consumption. Meanwhile, because each node sends the node ring network protection information to all other nodes and receives the node ring network protection information sent by all other nodes either, the interaction time of the ring network protection information is shortened and the discovery efficiency of ring network protection is improved. Meanwhile, each node saves the whole network or intra-domain ring network protection information, so the network management system can collect all ring network protection information by accessing any node, which can improve the management ability of the network management system.

## Claims

1. A method for updating or keeping whole network or intra-domain ring network protection information, wherein the method comprises:
a current node sending (102) node ring network protection information of the current node to other nodes except the current node;
the current node receiving (103) and saving node ring network protection information sent by other nodes, and updating or keeping (105, 107, 108, 110, 111) the whole network or intra-domain ring network protection information saved by the current node, wherein the total of all the node protection information saved on the current node is called as the whole network or intra-domain ring network protection information;
wherein the step of updating the whole network or intra-domain ring network protection information saved by the current node comprises:
performing (104, 106) processing of modification, addition or deletion on the whole network or intra-domain ring network protection information saved by the current node according to a message type and a protection ring identifier in the received node ring network protection information;
wherein the step of performing processing on the whole network or intra-domain ring network protection information saved by the current node comprises:
if the message type in the received node ring network protection information is modification, modifying (105) the whole network or intra-domain ring network protection information saved by the current node;
if the message type in the received node ring network protection information is addition, and the protection ring identifier exists in the node ring network protection information, adding (107) the node ring network protection information of a newly added node in the whole network or intra-domain ring network protection information saved by the current node, and updating the connection relation of the other node;
if the message type in the received node ring network protection information is addition, and the protection ring identifier does not exist in the node ring network protection information, newly adding (108) a protection ring storage branch in the whole network or intra-domain ring network protection information saved by the current node to save the node ring network protection information of the newly added node;
if the message type in the received node ring network protection information is deletion, and the protection ring identifier exists in the node ring network protection information, deleting (109, 110) the node ring network protection information of a node to be deleted in the whole network or intra-domain ring network protection information saved by the current node, updating the connection relation of the other node, and, if the number of nodes of the protection ring is less than one after the node is deleted, deleting the protection ring;
if the message type in the received node ring network protection information is deletion, and the protection ring identifier does not exist in the node ring network protection information, not performing (111) any processing.

2. The method for updating or keeping whole network or intra-domain ring network protection information according to claim 1, wherein, the node ring network protection information comprises: the protection ring identifier, a ring node identifier, the message type, eastbound and westbound node identifier of the node, a protection type of the protection ring, a protection state, a work protection pair configuration and a protection parameter.

3. The method for updating or keeping whole network or intra-domain ring network protection information according to claim 1, wherein, a condition for the node sending the node ring network protection information to other nodes comprises: a node initialization, a node deletion and node addition, a change in eastbound and westbound connection relation of the node, a change in protection state, a change in work protection pair configuration, or a change in protection parameter.

4. The method for updating or keeping whole network or intra-domain ring network protection information according to any of claims 1 to 3, wherein a carrier of the node ring network protection information is a neighbor discovery protocol or a topology discovery protocol, or an operation administration and maintenance message, or a singly defined protocol message.

5. A system for updating or keeping whole network or intra-domain ring network protection information, said system comprising a protection information sending module, a protection information receiving module and a protection information processing module; wherein
the protection information sending module is configured to: send node ring network protection information of a current node to other nodes except the current node;
the protection information receiving module is configured to: receive and save the node ring network protection information sent by the other nodes, wherein the total of all the node protection information saved on the current node is called as the whole network or intra-domain ring network protection information;
the protection information processing module is configured to: update or keep the whole network or intra-domain ring network protection information saved by the current node,
wherein the protection information processing module is configured to:
perform updating on the whole network or intra-domain ring network protection information saved by the current node, which comprises performing corresponding processing of modification, addition or deletion on the whole network or intra-domain ring network protection information saved by the current node according to a message type and a protection ring identifier in the received node ring network protection information;
wherein the protection information processing module comprises a message type identification module, a protection ring identifier identification module, an updating module, a newly adding module and a deleting module;
wherein the message type identification module is configured to identify whether the message type is modification, addition or deletion;
wherein the protection ring identifier identification module is configured to identify whether the protection ring identifier exists or not;
wherein the updating module is configured to modify the whole network or intra-domain ring network protection information when the message type is modification;
wherein the newly adding module is configured to:
newly add the node ring network protection information in the whole network or intra-domain ring network protection information when the message type is addition and the protection ring identifier exists, and update a connection relation of the node; and
newly add a protection ring storage branch in the whole network or intra-domain ring network protection information to save new node ring network protection information when the message type is addition and the protection ring identifier does not exist; and
wherein the deleting module is configured to:
delete the node ring network protection information in the whole network or intra-domain ring network protection information when the message type is deletion and the protection ring identifier exists, and update the connection relation of the node; and
delete the protection ring when the number of the nodes of the protection ring is less than one.

6. The system for updating or keeping whole network or intra-domain ring network protection information according to claim 5, wherein, the node ring network protection information comprises: the protection ring identifier, a ring node identifier, the message type, eastbound and westbound node identifier of the node, a protection type of the protection ring, a protection state, a work protection pair configuration and a protection parameter.

## Patentansprüche

1. Verfahren zum Aktualisieren oder Aufbewahren aller Netzwerk- oder Intra-Domain-Ringnetzwerkschutzinformationen, worin das Verfahren Folgendes umfasst:
einen aktuellen Knoten, der Knotenringnetzwerkschutzinformationen des aktuellen Knotens an andere Knoten, mit Ausnahme des aktuellen Knotens, sendet (102);
wobei der aktuelle Knoten die von anderen Knoten gesendeten Knotenringnetzwerkschutzinformationen empfängt (103) und speichert und die durch den aktuellen Knoten gespeicherten, gesamten Netzwerk- oder Intra-Domain-Ringnetzwerkschutzinformationen aktualisiert oder aufbewahrt (105, 107, 108, 110, 111), worin die Gesamtheit aller der auf dem aktuellen Knoten gespeicherten Knotenschutzinformationen als die gesamten Netzwerk- oder Intra-Domain-Ringnetzwerkschutzinformationen bezeichnet wird;
worin der Schritt des Aktualisierens der durch den aktuellen Knoten gespeicherten, gesamten Netzwerk- oder Intra-Domain-Ringnetzwerkschutzinformationen Folgendes umfasst:
Ausführen (104, 106) des Verarbeitens einer Modifizierung, Hinzufügung oder Löschung auf den durch den aktuellen Knoten gespeicherten, gesamten Netzwerk- oder Intra-Domain-Ringnetzwerkschutzinformationen gemäß einem Nachrichtentyp und einem Schutzring-Identifikator in den empfangenen Knotenringnetzwerkschutzinformationen;
worin der Schritt des Ausführens der Verarbeitung auf den durch den aktuellen Knoten gespeicherten, gesamten Netzwerk- oder Intra-Domain-Ringnetzwerkschutzinformationen Folgendes umfasst:
falls der Nachrichtentyp in den empfangenen Knotenringnetzwerkschutzinformationen eine Modifizierung ist, dann Modifizieren (105) der durch den aktuellen Knoten gespeicherten, gesamten Netzwerk- oder Intra-Domain-Ringnetzwerkschutzinformationen;
falls der Nachrichtentyp in den empfangenen Knotenringnetzwerkschutzinformationen eine Hinzufügung ist, und der Schutzring-Identifikator in den Knotenringnetzwerkschutzinformationen vorhanden ist, dann Hinzufügen (107) der Knotenringnetzwerkschutzinformationen eines neu hinzugefügten Knotens in den durch den aktuellen Knoten gespeicherten, gesamten Netzwerk- oder Intra-Domain-Ringnetzwerkschutzinformationen, und Aktualisieren des Verbindungsverhältnisses des anderen Knotens;
falls der Nachrichtentyp in den empfangenen Knotenringnetzwerkschutzinformationen eine Hinzufügung ist, und der Schutzring-Identifikator in den Knotenringnetzwerkschutzinformationen nicht vorhanden ist, dann erneutes Hinzufügen (108) eines Schutzringspeicherzweiges in den durch den aktuellen Knoten gespeicherten, gesamten Netzwerk- oder Intra-Domain-Ringnetzwerkschutzinformationen, um die Knotenringnetzwerkschutzinformationen des neu hinzugefügten Knotens zu speichern;
falls der Nachrichtentyp in den empfangenen Knotenringnetzwerkschutzinformationen ein Löschen ist, und der Schutzring-Identifikator in den Knotenringnetzwerkschutzinformationen vorhanden ist, dann Löschen (109, 110) der Knotenringnetzwerkschutzinformationen eines in den durch den aktuellen Knoten gespeicherten, gesamten Netzwerk- oder Intra-Domain-Ringnetzwerkschutzinformationen zu löschenden Knotens, Aktualisieren des Verbindungsverhältnisses des anderen Knotens, und, falls die Anzahl der Knoten des Schutzrings weniger als Eins ist, nachdem der Knoten gelöscht worden ist, Löschen des Schutzrings;
falls der Nachrichtentyp in den empfangenen Knotenringnetzwerkschutzinformationen ein Löschen ist, und der Schutzring-Identifikator in den Knotenringnetzwerkschutzinformationen nicht vorhanden ist, dann keinerlei Verarbeiten ausführen (111).

2. Verfahren zum Aktualisieren oder Aufbewahren aller Netzwerk- oder Intra-Domain-Ringnetzwerkschutzinformationen gemäß Anspruch 1, worin die Knotenringnetzwerkschutzinformationen Folgendes umfassen: den Schutzring-Identifikator, eine Ringknoten-Identifikator, den Nachrichtentyp, einen ostwärtigen und westwärtigen Knoten-Identifikator des Knotens, einen Schutztyp des Schutzrings, einen Schutzzustand, eine Arbeitsschutzpaarkonfiguration und einen Schutzparameter.

3. Verfahren zum Aktualisieren oder Aufbewahren aller Netzwerk- oder Intra-Domain-Ringnetzwerkschutzinformationen gemäß Anspruch 1, worin eine Bedingung für den Knoten, der die Knotenringnetzwerkschutzinformationen an andere Knoten sendet, Folgendes umfasst: eine Knoteninitialisierung, eine Knotenlöschung und eine Knotenhinzufügung, eine Änderung in dem ostwärtigen und dem westwärtigen Verbindungsverhältnis des Knotens, eine Änderung des Schutzzustands, eine Änderung der Arbeitsschutzpaarkonfiguration oder eine Änderung des Schutzparameters.

4. Verfahren zum Aktualisieren oder Aufbewahren aller Netzwerk- oder Intra-Domain-Ringnetzwerkschutzinformationen gemäß einem der Ansprüche 1 bis 3, worin ein Träger der Knotenringnetzwerkschutzinformationen ein Nachbarerkennungsprotokoll oder ein Topologieerkennungsprotokoll, oder eine Betriebsverwaltung und eine Wartungsnachricht oder eine einzeln definierte Protokollnachricht ist.

5. System zum Aktualisieren oder Aufbewahren aller Netzwerk- oder Intra-Domain-Ringnetzwerkschutzinformationen, wobei das System ein Schutzinformationssendemodul, ein Schutzinformationsempfangsmodul und ein Schutzinformationsverarbeitungsmodul umfasst; worin
das Schutzinformationssendemodul konfiguriert ist, Knotenringnetzwerkschutzinformationen eines aktuellen Knotens an andere Knoten, mit Ausnahme des aktuellen Knotens, zu senden;
das Schutzinformationsempfangsmodul konfiguriert ist, die durch die anderen Knoten gesendeten Knotenringnetzwerkschutzinformationen zu empfangen und zu speichern, worin die Gesamtheit aller auf dem aktuellen Knoten gespeicherten Knotenschutzinformationen als die gesamten Netzwerk- oder Intra-Domain-Ringnetzwerkschutzinformationen bezeichnet wird;
das Schutzinformationsverarbeitungsmodul konfiguriert ist, die durch den aktuellen Knoten gespeicherten, gesamten Netzwerk- oder Intra-Domain-Ringnetzwerkschutzinformationen zu aktualisieren oder aufzubewahren,
worin das Schutzinformationsverarbeitungsmodul zu Folgendem konfiguriert ist:
Ausführen eines Aktualisierens auf den durch den aktuellen Knoten gespeicherten, gesamten Netzwerk- oder Intra-Domain-Ringnetzwerkschutzinformationen, was das Ausführen eines jeweiligen Verarbeitens einer Modifizierung, einer Hinzufügung oder einer Löschung auf den durch den aktuellen Knoten gespeicherten, gesamten Netzwerk- oder Intra-Domain-Ringnetzwerkschutzinformationen gemäß einem Nachrichtentyp und einem Schutzring-Identifikator in den empfangenen Knotenringnetzwerkschutzinformationen umfasst;
worin das Schutzinformationsverarbeitungsmodul ein Nachrichtentyp-Identifikationsmodul, ein Schutzring-Identifikator-Identifikationsmodul, ein Aktualisierungsmodul, ein neu hinzugefügtes Modul und ein Löschungsmodul umfasst;
worin das Nachrichtentyp-Identifikationsmodul konfiguriert ist zu identifizieren, ob der Nachrichtentyp eine Modifizierung, eine Hinzufügung oder eine Löschung ist;
worin das Schutzring-Identifikator-Identifikationsmodul konfiguriert ist zu identifizieren, ob der Schutzring-Identifikator vorhanden ist oder nicht;
worin das Aktualisierungsmodul konfiguriert ist, die gesamten Netzwerk- oder Intra-Domain-Ringnetzwerkschutzinformationen zu modifizieren, wenn der Nachrichtentyp eine Modifizierung ist;
worin das neu hinzugefügte Modul zu Folgendem konfiguriert ist:
Neu-Hinzufügen der Knotenringnetzwerkschutzinformationen in den gesamten Netzwerk- oder Intra-Domain-Ringnetzwerkschutzinformationen, wenn der Nachrichtentyp ein Hinzufügen ist und der Schutzring-Identifikator vorhanden ist, und Aktualisieren eines Verbindungsverhältnis des Knotens; und
Neu-Hinzufügen eines Schutzringspeicherzweigs in den gesamten Netzwerk- oder Intra-Domain-Ringnetzwerkschutzinformationen, um neue Knotenringnetzwerkschutzinformationen zu speichern, wenn der Nachrichtentyp ein Hinzufügen ist und der Schutzring-Identifikator nicht vorhanden ist; und
worin das Löschungsmodul zu Folgendem konfiguriert ist:
Löschen der Knotenringnetzwerkschutzinformationen in den gesamten Netzwerk- oder Intra-Domain-Ringnetzwerkschutzinformationen, wenn der Nachrichtentyp ein Löschen ist und der Schutzring-Identifikator vorhanden ist, und Aktualisieren des Verbindungsverhältnisses des Knotens; und
Löschen des Schutzrings, wenn die Anzahl der Knoten des Schutzrings weniger als Eins ist.

6. System zum Aktualisieren oder Aufbewahren aller Netzwerk- oder Intra-Domain-Ringnetzwerkschutzinformationen gemäß Anspruch 5, worin die Knotenringnetzwerkschutzinformationen Folgendes umfassen: den Schutzring-Identifikator, einen Ringknoten-Identifikator, den Nachrichtentyp, einen ostwärtigen und westwärtigen Knoten-Identifikator des Knotens, einen Schutztyp des Schutzrings, einen Schutzzustand, eine Arbeitsschutzpaarkonfiguration und einen Schutzparameter.

## Revendications

1. Procédé de mise à jour ou de conservation d'informations de protection de réseau en anneau intra-domaine ou de l'ensemble du réseau, dans lequel le procédé comprend les étapes ci-dessous dans lesquelles, ou consistant à :
un noeud en cours envoie (102) des informations de protection de réseau en anneau de noeuds du noeud en cours à d'autres noeuds, à l'exception du noeud en cours ;
le noeud en cours reçoit (103) et sauvegarde des informations de protection de réseau en anneau de noeuds envoyées par d'autres noeuds, et met à jour ou conserve (105, 107, 108, 110, 111) les informations de protection de réseau en anneau intra-domaine ou de l'ensemble du réseau sauvegardées par le noeud en cours, dans lequel la totalité de toutes les informations de protection de noeuds sauvegardées sur le noeud en cours prend le nom d'informations de protection de réseau en anneau intra-domaine ou de l'ensemble du réseau ;
dans lequel l'étape de mise à jour des informations de protection de réseau en anneau intra-domaine ou de l'ensemble du réseau sauvegardées par le noeud en cours comporte les étapes ci-dessous consistant à :
mettre en oeuvre (104, 106) un traitement de modification, d'ajout ou de suppression sur les informations de protection de réseau en anneau intra-domaine ou de l'ensemble du réseau sauvegardées par le noeud en cours, selon un type de message et un identifiant d'anneau de protection dans les informations de protection de réseau en anneau de noeuds reçues ;
dans lequel l'étape de mise en oeuvre de traitement sur les informations de protection de réseau en anneau intra-domaine ou de l'ensemble du réseau sauvegardées par le noeud en cours comporte les étapes ci-dessous consistant à :
si le type de message dans les informations de protection de réseau en anneau de noeuds reçues concerne une modification, modifier (105) les informations de protection de réseau en anneau intra-domaine ou de l'ensemble du réseau sauvegardées par le noeud en cours ;
si le type de message dans les informations de protection de réseau en anneau de noeuds reçues concerne un ajout, et si l'identifiant d'anneau de protection existe dans les informations de protection de réseau en anneau de noeuds, ajouter (107) les informations de protection de réseau en anneau de noeuds d'un noeud nouvellement ajouté dans les informations de protection de réseau en anneau intra-domaine ou de l'ensemble du réseau sauvegardées par le noeud en cours, et mettre à jour la relation de connexion de l'autre noeud ;
si le type de message dans les informations de protection de réseau en anneau de noeuds reçues concerne un ajout, et si l'identifiant d'anneau de protection n'existe pas dans les informations de protection de réseau en anneau de noeuds, ajouter nouvellement (108) une branche de stockage d'anneau de protection dans les informations de protection de réseau en anneau intra-domaine ou de l'ensemble du réseau sauvegardées par le noeud en cours en vue de sauvegarder les informations de protection de réseau en anneau de noeuds du noeud nouvellement ajouté ;
si le type de message dans les informations de protection de réseau en anneau de noeuds reçues concerne une suppression, et si l'identifiant d'anneau de protection existe dans les informations de protection de réseau en anneau de noeuds, supprimer (109, 110) les informations de protection de réseau en anneau de noeuds d'un noeud à supprimer dans les informations de protection de réseau en anneau intra-domaine ou de l'ensemble du réseau sauvegardées par le noeud en cours, mettre à jour la relation de connexion de l'autre noeud, et, si le nombre de noeuds de l'anneau de protection est inférieur à un à l'issue de la suppression du noeud, supprimer l'anneau de protection ;
si le type de message dans les informations de protection de réseau en anneau de noeuds reçues concerne une suppression, et si l'identifiant d'anneau de protection n'existe pas dans les informations de protection de réseau en anneau de noeuds, ne pas mettre en oeuvre (111) un quelconque traitement.

2. Procédé de mise à jour ou de conservation d'informations de protection de réseau en anneau intra-domaine ou de l'ensemble du réseau selon la revendication 1, dans lequel, les informations de protection de réseau en anneau de noeuds comportent : l'identifiant d'anneau de protection, un identifiant de noeud en anneau, le type de message, un identifiant de noeud en direction de l'ouest et en direction de l'est du noeud, un type de protection de l'anneau de protection, un état de protection, une configuration de paire de protection de travail, et un paramètre de protection.

3. Procédé de mise à jour ou de conservation d'informations de protection de réseau en anneau intra-domaine ou de l'ensemble du réseau selon la revendication 1, dans lequel, une condition pour l'envoi, par le noeud, des informations de protection de réseau en anneau de noeuds, à autres noeuds, comporte : une initialisation de noeud, une suppression de noeud et un ajout de noeud, un changement de relation de connexion en direction de l'ouest et en direction de l'est du noeud, un changement d'état de protection, un changement de configuration de paire de protection de travail, ou un changement de paramètre de protection.

4. Procédé de mise à jour ou de conservation d'informations de protection de réseau en anneau intra-domaine ou de l'ensemble du réseau selon l'une quelconque des revendications 1 à 3, dans lequel un support des informations de protection de réseau en anneau de noeuds est un protocole de découverte de voisins, ou un protocole de découverte de topologie, ou un message d'exploitation, administration et maintenance, ou encore un message de protocole défini individuellement.

5. Système destiné à mettre à jour ou à conserver des informations de protection de réseau en anneau intra-domaine ou de l'ensemble du réseau, ledit système comportant un module d'envoi d'informations de protection, un module de réception d'informations de protection et un module de traitement d'informations de protection ; dans lequel
le module d'envoi d'informations de protection est configuré de manière à : envoyer des informations de protection de réseau en anneau de noeuds d'un noeud en cours à d'autres noeuds, à l'exception du noeud en cours ;
le module de réception d'informations de protection est configuré de manière à : recevoir et enregistrer les informations de protection de réseau en anneau de noeuds envoyées par les autres noeuds, dans lequel la totalité de toutes les informations de protection de noeuds sauvegardées sur le noeud en cours prend le nom d'informations de protection de réseau en anneau intra-domaine ou de l'ensemble du réseau ;
le module de traitement d'informations de protection est configuré de manière à : mettre à jour ou conserver les informations de protection de réseau en anneau intra-domaine ou de l'ensemble du réseau sauvegardées par le noeud en cours ;
dans lequel le module de traitement d'informations de protection est configuré de manière à :
mettre en oeuvre une mise à jour sur les informations de protection de réseau en anneau intra-domaine ou de l'ensemble du réseau sauvegardées par le noeud en cours, laquelle étape comporte la mise en oeuvre d'un traitement correspondant de modification, d'ajout ou de suppression sur les informations de protection de réseau en anneau intra-domaine ou de l'ensemble du réseau sauvegardées par le noeud en cours, selon un type de message et un identifiant d'anneau de protection dans les informations de protection de réseau en anneau de noeuds reçues ;
dans lequel le module de traitement d'informations de protection comporte un module d'identification de type de message, un module d'identification d'identifiant d'anneau de protection, un module de mise à jour, un module de nouvel ajout et un module de suppression ;
dans lequel le module d'identification de type de message est configuré de manière à identifier si le type de message concerne une modification, un ajout ou une suppression ;
dans lequel le module d'identification d'identifiant d'anneau de protection est configuré de manière à déterminer si l'identifiant d'anneau de protection existe ou non ;
dans lequel le module de mise à jour est configuré de manière à modifier les informations de protection de réseau en anneau intra-domaine ou de l'ensemble du réseau lorsque le type de message concerne une modification ;
dans lequel le module de nouvel ajout est configuré de manière à :
ajouter nouvellement les informations de protection de réseau en anneau de noeuds dans les informations de protection de réseau en anneau intra-domaine ou de l'ensemble du réseau lorsque le type de message concerne un ajout et lorsque l'identifiant d'anneau de protection existe, et mettre à jour une relation de connexion du noeud ; et
ajouter nouvellement une branche de stockage d'anneau de protection dans les informations de protection de réseau en anneau intra-domaine ou de l'ensemble du réseau en vue de sauvegarder de nouvelles informations de protection de réseau en anneau de noeuds lorsque le type de message concerne un ajout et lorsque l'identifiant d'anneau de protection n'existe pas ; et
dans lequel le module de suppression est configuré de manière à :
supprimer les informations de protection de réseau en anneau de noeuds dans les informations de protection de réseau en anneau intra-domaine ou de l'ensemble du réseau lorsque le type de message concerne une suppression et lorsque l'identifiant d'anneau de protection existe, et mettre à jour la relation de connexion du noeud ; et
supprimer l'anneau de protection lorsque le nombre des noeuds de l'anneau de protection est inférieur à un.

6. Système destiné à mettre à jour ou à conserver des informations de protection de réseau en anneau intra-domaine ou de l'ensemble du réseau selon la revendication 5, dans lequel, les informations de protection de réseau en anneau de noeuds comportent : l'identifiant d'anneau de protection, un identifiant de noeud en anneau, le type de message, un identifiant de noeud en direction de l'ouest et en direction de l'est du noeud, un type de protection de l'anneau de protection, un état de protection, une configuration de paire de protection de travail, et un paramètre de protection.
